# EUROPEAN PATENT SPECIFICATION

(11) **EP 4 044 269 B1**
(45) Date of publication and mention of the grant of the patent: **16.09.2026**
(21) Application number: 21382122.6
(22) Date of filing: 16.02.2021
(51) Int. Cl.: H01M 4/00, H01M 4/133

(54) **WINERY-WASTE-DERIVED GRAPHENE-LIKE CARBON FOR POTASSIUM ENERGY STORAGE**
AUS WINZEREIABFÄLLEN GEWONNENER GRAPHEN-ÄHNLICHER KOHLENSTOFF ZUR SPEICHERUNG VON KALIUMENERGIE
CARBONE DE TYPE GRAPHÈNE DÉRIVÉ DE DÉCHETS DE VINIFICATION POUR LE STOCKAGE DE L'ÉNERGIE DU POTASSIUM

(43) Date of publication of application: 17.08.2022
(73) Proprietor: Napptilus Battery Labs, S.L., 08039 Barcelona (ES); Agencia Estatal Consejo Superior de Investigaciones Cientificas, M.P., 28006 Madrid (ES); Institut Catalá de Nanociéncia i Nanotecnologia (ICN2), 08193 Bellaterra, Barcelona (ES)
(72) Inventor: GÓMEZ, Pedro, 08039 Barcelona (ES); AIBAR, Jordi, 08039 Barcelona (ES); DUBAL, Deepak, 08039 Barcelona (ES); TERRADAS, Rafael, 08039 Barcelona (ES)
(74) Representative: Espiell Gomez, Ignacio

(56) References cited:
- US-B2- 9 742 027
- AN YONGLING ET AL: "Green and tunable fabrication of graphene-like N-doped carbon on a 3D metal substrate as a binder-free anode for high-performance potassium-ion batteries", JOURNAL OF MATERIALS CHEMISTRY A, vol. 7, no. 38, 1 October 2019 (2019-10-01), GB, pages 21966 - 21975, XP055845958, ISSN: 2050-7488, DOI: 10.1039/C9TA08721D
- FENG YIMING ET AL: "Chemical-enzymatic fractionation to unlock the potential of biomass-derived carbon materials for sodium ion batteries", JOURNAL OF MATERIALS CHEMISTRY A, vol. 7, no. 47, 3 December 2019 (2019-12-03), GB, pages 26954 - 26965, XP055845548, ISSN: 2050-7488, DOI: 10.1039/C9TA09124F

## Description

The invention relates to development of graphene-like carbons using solid-winery-waste as raw material. Furthermore, the present invention relates to the use of said graphene-carbons as electrode materials for energy storage in potassium-ion battery.

### STATE OF THE ART

Solid-winery waste is an attractive alternative for the production of carbon materials, particularly graphene-like carbons. Several million tons of winery-waste (grape marc including skins, seed and ) is generated in worldwide each year, where it is either (a) disposed of directly into landfill or (c) combusted in order to co-generate power or heat for other processes. In landfill, winery-waste can decompose under anaerobic conditions into methane gas, a potential source of greenhouse gas emissions. Therefore, utilizing such solid-winery waste as a precursor for preparation of graphene-like carbons will not only reduce global carbon footprint but also has definite potential for Spanish/Global primary producers to value-add and sell into the future high growth potassium-energy storage (Potassium ion batteries (KIBs)) market.

Energy is fundamental to our quality of life and represents one of the cornerstones of modern economics. The demand for energy storage has exponentially increased due to the technological advancements and the crucial role storage will play in the ongoing transformation of the energy sector. Although, lithium-ion batteries (LIBs) currently outperform other competing technologies, the limited abundance of lithium in the Earth's crust (0.0017 wt %) and the high cost of precursor materials mean that the technology will be unable to meet the increasing demands of electric vehicles and large-scale stationary applications.

Potassium-ion batteries (KIBs) are a promising alternative energy storage system that recently came into the spotlight. They operate by the simple working mechanism of shuttling ions back and forth, which is the same mode of operation as LIBs. The chemistry of these batteries exhibits a low redox potential of K⁺/K (-2.93 V/standard hydrogen electrode, very close to that of Li⁺/Li ~ -3.03 V/SHE), which endows them with a desirable large operating voltage. This in turn leads to higher energy density when compared with lower voltage systems. Moreover, the large abundance of potassium (1.5 wt % in Earth's crust) may further reduce raw material costs. The most fascinating advantage of KIBs over LIBs is the fast potassium-ion transport kinetics in the electrolyte solvent. This is a consequence of the smaller Stokes' radius of potassium ions, just 3.6 A compared to the larger Li⁺ (4.8 A) and Na⁺ (4.6 A) ions. However, the practical realization of KIBs is impeded by less than satisfactory rate-performance and lifespan due to the sluggish ion-transport kinetics of potassium within the electrode materials.

Document D1 (AN YONGLING et al., "Green and tunable fabrication of graphene-like N-doped carbon on a 3D metal substrate as a binder-free anode for high-performance potassium-ion batteries", Journal of Materials Chemistry A, 2019) describes a method for preparing nitrogen-doped graphene-like carbons directly deposited on a three-dimensional metallic substrate. The resulting material is tested as a binder-free anode in potassium-ion batteries, showing improved electrochemical performance such as capacity and cycling stability. However, D1 is focused on laboratory-scale fabrication using a specific deposition process onto a conductive metal scaffold, which involves techniques and precursor systems not easily scalable or sustainable at industrial level. In addition, the process relies on engineered substrates and chemical doping routes, without addressing the possibility of using abundant and low-cost organic residues as a carbon source.

Document D2 (US 9 742 027 B2, Sharp Laboratories of America Inc., 2017) discloses electrode structures for alkali-ion batteries, including potassium-ion systems, with the aim of improving stability, cycle life and energy density. The emphasis of D2 lies on designing electrode architectures with tailored porosity and interfaces to mitigate degradation during charge-discharge cycles. While the disclosure is relevant to the general development of electrode designs, it does not consider the direct valorization of biomass feedstocks as a precursor for graphene-like carbons. D2 focuses on engineered electrodes fabricated from conventional or synthetic materials rather than from agricultural or industrial waste streams.

Accordingly, D1 and D2 both relate to potassium-ion battery electrodes based on advanced carbon structures, yet neither addresses the use of winery waste as a raw material. They do not suggest converting such abundant biomass into graphene-like carbons and using them as electrodes. The present invention distinguishes itself by introducing a sustainable and cost-effective route for producing high-performance graphene-like carbons derived from winery by-products, thereby combining environmental benefits with enhanced electrochemical performance.

It should be noted that a few relevant publications can be found in the literature where graphene-like carbon materials derived from biomass are used as electrodes for supercapacitors, but never been explored in potassium ion batteries (KIB). For example, glucose and fructose (Angwante Chemie 57, 2018, 16898-16902), recycled fiberboard precursor (ACS Omega 2019, 4, 25, 21446-21458), ginger root (New J. Chem., 2019, 43, 1186-1194). **However, winery-waste has never been explored as raw material for graphene-like carbon production and never explored as electrode material in potassium ion batteries.**

### DESCRIPTION OF THE INVENTION

The present invention discloses solid winery waste as cheap and sustainable raw materials for the preparation of few-layer (high-quality) graphene-like carbon materials, which can be used as potential electrode materials in potassium ion batteries (KIBs).

In the present invention, the term "Graphene-like" describes a nanosheet structure of carbon, which appears to be like a graphene with graphitic layers in the range from few layers (3-5) to multi-layers (>5) derived from non-conventional raw material (solid winery waste).

The "Graphene-like carbons" ENFs of the present invention can be used as electrode in potassium-ion batteries owing to their unique characteristics such as nanosheet structure, high specific surface area and uniform pore size distribution. These graphene-like carbons demonstrate an excellent electrochemical performance in terms of capacity and cycle life in KIBs.

The use of the winery-waste derived graphene-like carbons of the invention as electrodes in K-ion battery constitutes an innovative concept of electrical energy storage system, which will draw much attention for stationary energy storage applications due to their low cost and sustainable approach coupled with excellent battery performance.

The graphene-like materials of the present invention have reached specific capacity values of about 268 mAh/g as anode and 80 mAh/g as cathode material with an excellent Coulombic efficiency of >95 % after 2000 cycles.

A first aspect of the present invention relates to Graphene-like carbons from solid-winery waste ((herein "Graphene-like carbon of the invention") characterized in that it comprises

A solid winery-waste in the powder form was mixed with activating agent in suitable ratio without any solvent and crushed in mortar. The said mixture was then subjected to the heat treatment in special gas environment. The preparative parameters such as temperature, heating rate, cooling rate and time were optimized to obtain said graphene-like carbons.

The graphene-based compound or composite optionally comprises electroactive substances either attached to the graphene based compounds or forming a mixture by dispersion in the base fluid. electro-active substances are those known for a person skilled in the art.

Another aspect of the invention refers to the use of the "Graphene-like carbon: of the invention as electrode of potassium ion battery, comprising two electrodes (positive and negative) with conducting current collectors in contact (copper or aluminium foil) separated by a separator.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

FIG. 1. Raman spectra of Graphene-like carbon synthesized using solid winery waste as raw material at different temperatures (700, 800 and 900 °C) at fixed waste to KOH ratio of 1:2.
FIG. 2 Scanning electron micrographs of graphene-like carbon prepared at three different temperatures and transmission electron micrographs of graphene-like carbon prepared at 800 °C at different magnifications.
FIG. 3. Nitrogen adsorption/desorption isotherm of graphene-like carbon prepared at three different temperatures.
FIG. 4. Raman spectra of Graphene-like carbon synthesized using solid winery waste as raw material with varying waste to KOH ratio of 1:1, 1:2 and 2:1 at 800 °C.
FIG. 5 Scanning electron micrographs of graphene-like carbon prepared at with varying waste to KOH ratio of 1:1, 1:2 and 2:1 at 800 °C and transmission electron micrographs of graphene-like carbon prepared at 1:2 ratio at different magnifications.
FIG. 6. Nitrogen adsorption/desorption isotherm of graphene-like carbon prepared with varying waste to KOH ratio of 1:1, 1:2 and 2:1 at 800 °C.
FIG. 7 Cyclic voltammetry (CV) curves of Graphene-like carbon as anode material (synthesized with 1:2 ratio and 800 °C) recorded at 0.2 mV/s scan rate.
FIG. 8 Galvanostatic charge/discharge curves for graphene-like carbon as **anode material** (synthesized with 1:2 ratio and 800 °C) recorded at 0.1 C (27.9 mA/g).
FIG. 9 Cycling stability of graphene-like carbon as **anode material** (synthesized with 1:2 ratio and 800 °C) recorded at 0.2 C (55.8 mA/g) over 1000 cycles.
FIG. 10 Cyclic voltammetry (CV) curves of Graphene-like carbon as **cathode material** (synthesized with 1:2 ratio and 800 °C) recorded at different scan rates from 2 mV/s to 10 mV/s.
FIG. 11 Galvanostatic charge/discharge curves for graphene-like carbon as **cathode material** (synthesized with 1:2 ratio and 800 °C) recorded at 0.1 A/g.
FIG. 12 Cycling stability of graphene-like carbon as **cathode material** (synthesized with 1:2 ratio and 800 °C) recorded at 2 A/g over 4000 cycles.

### EXAMPLES

### Example 1: Synthesis of Graphene-like carbon at various temperature.

Grape marc (solid winery waste) was cleaned with 5 M hydrochloric acid (HCl) for 5 hr to clean the inorganic impurities and dried in oven for 24 hr at 70 °C. The dried grape marc were crushed in grinder to make fine powder. In the laboratory mortar, grape marc powder was mixed with potassium hydroxide (KOH) in 1:2 wt% ratio and crushed for 1m hr. Later, the mixture was placed in tube furnace and heat-treated at 700, 800 and 900 °C in the presence of N gas for 2 h. The obtained product was cleaned with 10% HCl, water, and ethanol, separately. The final product was dried at 80 °C in a vacuum oven overnight.

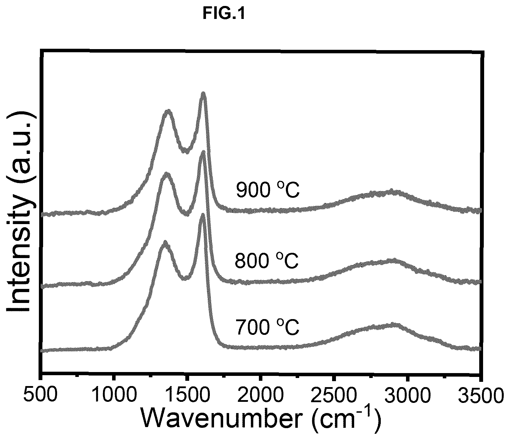

Results of Raman analysis are depicted in **FIG 1****).** The intensity ratio of the Raman D band (at 1349 cm⁻¹) and G band (at 1594 cm⁻¹) was D/G = 0.92, thereby confirming the formation of graphene-like carbon. An additional hump at 2800 cm is characteristics 2D peak that corresponds to the graphitic layers in graphene.

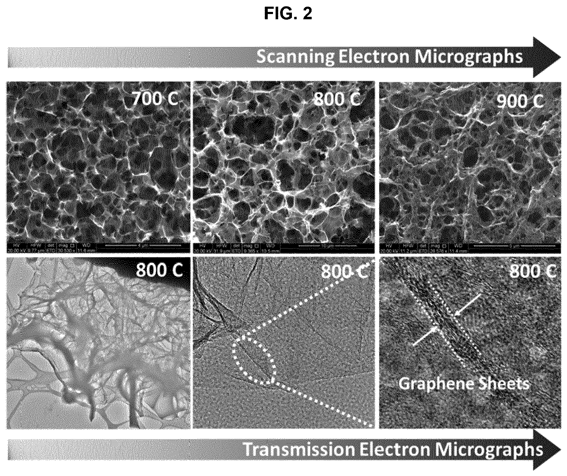

Surface morphological analysis of Graphene-like carbon sample was carried out by scanning electron microscopy (FE-SEM, Tescan Mira) and a transmission electron microscope (TEM, JEOL-2100). See FIG 2. HRTEM revealed the formation of few layer graphene with highly transparent aspect whereas FESEM and TEM images of a bulk sample showed nanosheets like structures.

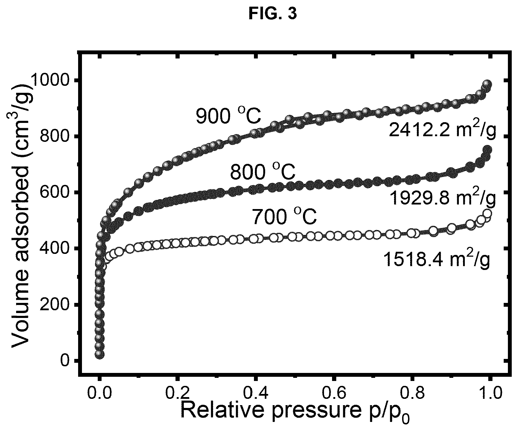

N2 adsorption-desorption experiments were performed to determine the surface area of the winery-waste-derived carbons using a Micromeritics 3 Flex instrument. Results are shown in **FIG. 3****.** A distinct hysteresis loop observed is ascribed to the presence of a mesoporous structure in the interleaving nanosheets with some macroporous region. The highest specific surface area was found to be 2412.2 m²g⁻¹.

### Example 2: Synthesis of graphene-like carbon with KOH ratio

Fine powder of grape marc was crushed with KOH in different weight ratio (grape marc: KOH = 1:1; 1:2 and 2:1) in mortar for 1 hr. Later, the mixture was placed in tube furnace and heat-treated at 800 °C in the presence of N₂ gas for 2 h. The obtained product was cleaned with 10% HCl, water, and ethanol, separately. The final product was dried at 80 °C in a vacuum oven overnight.

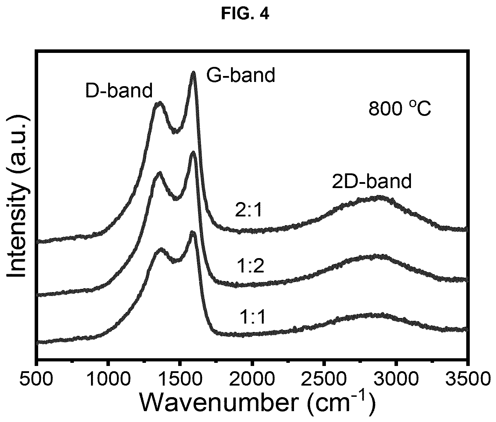

Results of Raman analysis are depicted in FIG 4. The intensity ratio of the Raman D band (at 1349 cm⁻¹) and G band (at 1594 cm⁻¹) was D/G = 0.82, thereby confirming the formation of graphene-like carbon. An additional hump at 2800 cm⁻¹ is characteristics 2D peak that corresponds to the graphitic layers in graphene.

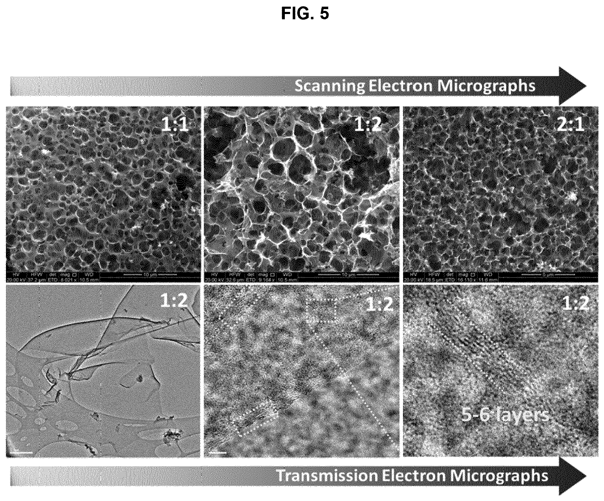

Surface morphological analysis of Graphene-like carbon sample was carried out by scanning electron microscopy (FE-SEM, Tescan Mira) and a transmission electron microscope (TEM, JEOL-2100). See FIG 5. HRTEM revealed the formation of few layer graphene with highly transparent aspect whereas FESEM and TEM images of a bulk sample showed nanosheets like structures.

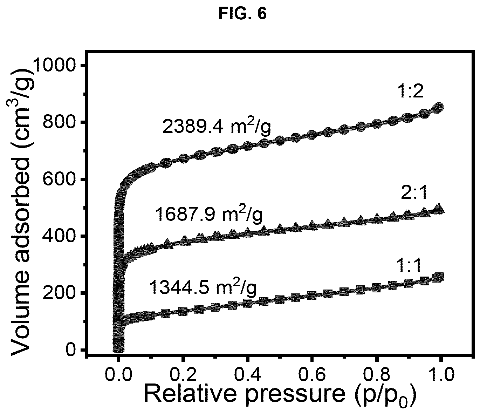

N2 adsorption-desorption experiments were performed to determine the surface area of the biomass-derived carbons using a Micromeritics 3 Flex instrument. Results are shown in **FIG. 6****.** A distinct hysteresis loop observed is ascribed to the presence of a mesoporous structure in the interleaving nanosheets with some macroporous region.

### Example 3: Electrochemical characterization of Graphene-like carbons

For electrochemical testing, firstly the electrodes were prepared using standard method where graphene-like carbon, acetylene black and polyvinyl difluoride (PVDF) were mixed in N-Methyl-2-pyrrolidone (NMP) solvent with 80:10:10 ratio. The paste was then casted on current collector (aluminium) using doctor-blade method and further dried in a vacuum oven overnight. The potassium-ion half-cells were assembled in glovebox using coin-cell design. The active materials and potassium metal-foil were used as working and counter electrodes, respectively. 1M potassium hexafluorophosphate (KPF₆) in ethylene carbonate:dimethyl carbonate (EC:DMC) (1:1 v/v) electrolyte was used with a glass microfiber membrane as a separator. The average mass loaded on Al-foil was 1.1 mg/cm? for electrodes. All electrochemical tests were performed using Biologic VMP-300 potentiostat, and GCD was executed using Neware battery testers.

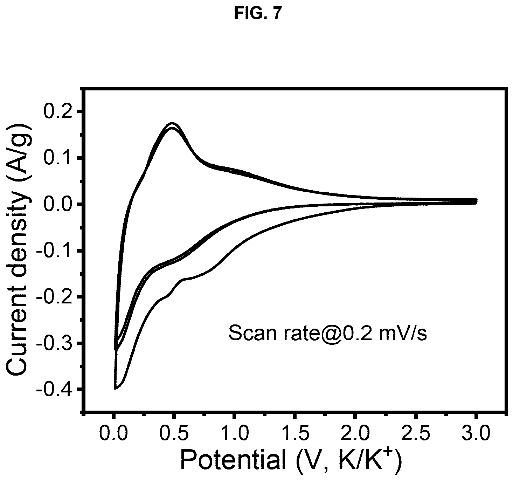

**FIG. 7** shows the CV curves of graphene-like carbon as anode material at slow scan rate (0.2 mV.s⁻¹). During the first cathodic scan, a broad peak at around 0.74 V, which disappears in the subsequent cycles, can be assigned to the formation of a stable solid electrolyte interface (SEI) layer on electrode. The large sharp cathodic current at around 0.01 V is related to the insertion of K⁺ into graphitic interlayers to form K-intercalated compound (KCs). While in the anodic scan, a peak at 0.5 V is observed, which can be assigned to the de-insertion of K⁺ ions. After the first cycle, all the CV curves overlap with each other, indicating a good reversibility and stability of the material.

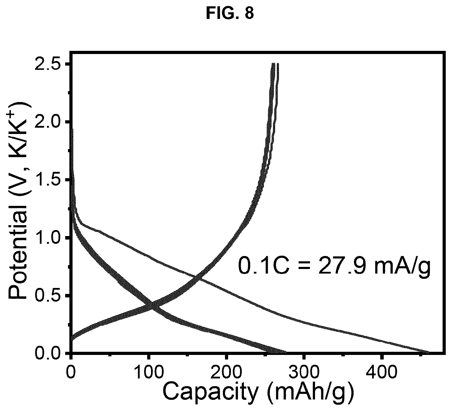

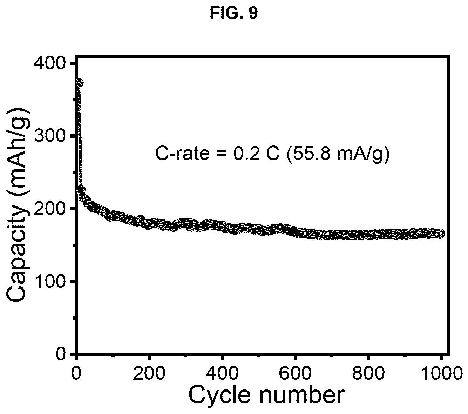

**FIG. 8** shows the first ten GCD profiles of graphene-like carbon anode at 0.1 C (1 C = 279 mA/g), which displays a similar trend to the CV curves, implying highly reversible K-ion storage. Its further reveals an initial discharge capacity of 454 mAh g' and subsequent initial (re)charge capacity of 268 mAh g⁻¹, corresponding to an ICE of 58.4%. The initial irreversible capacity is attributed to decomposition of electrolyte in the formation of the SEI layer on the graphene-like carbon anode. Moreover, the galvanostatic cycling performance was found to be stable, with cycle efficiencies greater than 97.6 % after 1500 charge/discharge cycles (FIG. 9).

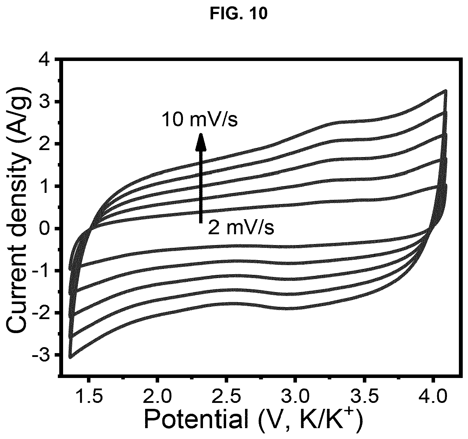

Similar results FIG. 10 shows the CV curves of graphene-like carbon as cathode material at scan rate of 5 mV.s⁻¹. The electrochemical capacitive properties of graphene-like carbon prepared at 800 °C electrode were examined in a half-cell. The CV curves display quasi-rectangular shapes signifying a characteristic electric double layer capacitance (EDLC) behaviour with additional pseudocapacitive hump.

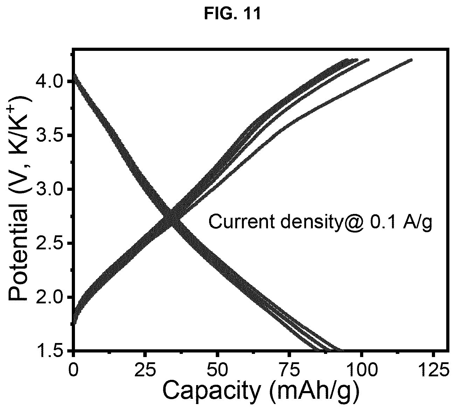

**FIG. 11** shows the GCD profiles of graphene-like carbon cathode at 0.1 A g⁻¹, displaying non-ideal straight lines shapes, which further confirms the pseudocapacitive contribution, supporting the CV results. The maximum specific capacity was determined to be 80 mAh g⁻¹

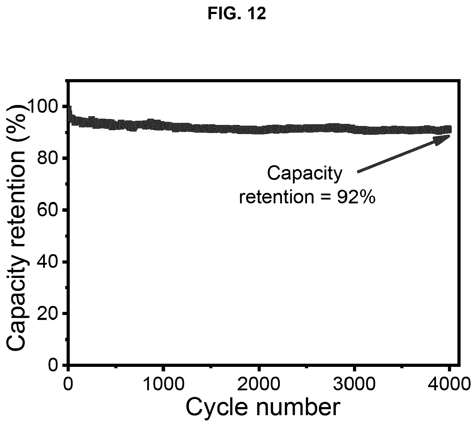

Moreover, the long-term cycling stability of graphene-like carbon-cathode was measured at 2 A g⁻¹ over 4000 cycles. Notably, the material retains 91% of initial capacitance **(****FIG. 12****).**

## Claims

1. An electrode as cathode and anode for a potassium ion battery, said electrode comprising a graphene-like carbon, **characterized in that**:
the graphene-like carbon is on an aluminum substrate;
the graphene-like carbon is prepared by chemo-pyrolysis method using grape marc as raw material and an activating agent;
the grape marc is in a weight percent between 1 % and 10 % based on the total weight of the activating agent;
the chemo-pyrolysis is carried out at a heating temperature of in between 400 °C to 1500 °C;
the activating agent is selected from a list consisting of potassium hydroxide, potassium carbonate, and Zinc chloride; and
the activating agent is in a weight percent between 1 % and 10 % based on the total weight of the grape marc material.

2. The electrode according to claim 1, wherein the chemo-pyrolysis is carried out at a heating/cooling rate of in between 1 °C/min and 10 °C/min.

3. The electrode according to claim claims 1 or 2, wherein the chemo-pyrolysis is carried out at a heating time of in between 30 min to 20 hr.

4. A potassium ion battery comprising an electrode as cathode and anode according to claim 1, 2 or 3, an electrolyte, a separator and an anode comprising a potassium metal foil.

## Patentansprüche

1. Elektrode als Kathode und Anode für eine Kalium-Ionen-Batterie, wobei die Elektrode einen graphenartigen Kohlenstoff umfasst, **dadurch gekennzeichnet, dass**:
sich der graphenartige Kohlenstoff auf einem Aluminiumsubstrat befindet;
der graphenartige Kohlenstoff durch ein Chemo-Pyrolyse-Verfahren unter Verwendung von Traubentrester als Rohstoff und eines Aktivierungsmittels hergestellt wird;
der Traubentrester in einem Gewichtsprozentsatz zwischen 1 % und 10 % basierend auf dem Gesamtgewicht des Aktivierungsmittels vorliegt;
die Chemo-Pyrolyse bei einer Erhitzungstemperatur zwischen 400 °C und 1500 °C durchgeführt wird;
das Aktivierungsmittel aus einer Liste bestehend aus Kaliumhydroxid, Kaliumcarbonat und Zinkchlorid ausgewählt wird; und
das Aktivierungsmittel in einem Gewichtsprozentsatz zwischen 1 % und 10 % basierend auf dem Gesamtgewicht des Traubentresters vorliegt.

2. Elektrode nach Anspruch 1, wobei die Chemo-Pyrolyse mit einer Erhitzungs-/Abkühlrate zwischen 1 °C/min und 10 °C/min durchgeführt wird.

3. Elektrode nach Anspruch 1 oder 2, wobei die Chemo-Pyrolyse bei einer Erhitzungsdauer zwischen 30 Minuten und 20 Stunden durchgeführt wird.

4. Kalium-Ionen-Batterie, umfassend eine Elektrode als Kathode und Anode nach Anspruch 1, 2 oder 3, einen Elektrolyten, einen Separator und eine Anode, die eine Kaliummetallfolie umfasst.

## Revendications

1. Électrode servant de cathode et d'anode pour une batterie à ions potassium, ladite électrode comprenant un carbone de type graphène, **caractérisée en ce que** :
le carbone de type graphène est sur un substrat en aluminium ;
le carbone de type graphène est préparé par un procédé de chimio-pyrolyse utilisant du marc de raisin comme matière première et un agent d'activation ;
le marc de raisin est présent dans un pourcentage en poids entre 1 % et 10 % par rapport au poids total de l'agent d'activation ;
la chimio-pyrolyse est effectuée à une température de chauffage comprise entre 400 °C et 1 500 °C ;
l'agent d'activation est choisi dans une liste constitué d'hydroxyde de potassium, de carbonate de potassium, et de chlorure de zinc ; et
l'agent d'activation est dans un pourcentage en poids entre 1 % et 10 % par rapport au poids total de la matière de marc de raisin.

2. Électrode selon la revendication 1, dans laquelle la chimio-pyrolyse est effectuée à une vitesse de chauffage/refroidissement comprise entre 1 °C/min et 10 °C/min.

3. Électrode selon la revendication 1 ou 2, dans laquelle la chimio-pyrolyse est effectuée à une durée de chauffage comprise entre 30 min et 20 h.

4. Batterie à ions de potassium comprenant une électrode servant de cathode et d'anode selon la revendication 1, 2 ou 3, un électrolyte, un séparateur et une anode comprenant une feuille métallique de potassium.
